# EUROPEAN PATENT APPLICATION

(11) **EP 2 770 658 A1**
(43) Date of publication of application: **27.08.2014**
(21) Application number: 12842047.8
(22) Date of filing: 15.03.2012
(51) Int. Cl.: H04L 1/18

(54) **METHOD AND SYSTEM FOR SENDING CONTROL SIGNALING**

(30) Priority: 20.10.2011 CN 201110321049
(71) Applicant: ZTE Corporation, Shenzhen, Guangdong 518057 (CN)
(72) Inventor: WU, Dongling, Shenzhen Guangdong 518057 (CN); HAN, Guangtao, Shenzhen Guangdong 518057 (CN)
(74) Representative: Gevers Patents
(86) International application number: PCT/CN2012/072401
(87) International publication number: WO 2013/056527

(57) **Abstract**

Disclosed is a method for transmitting control signaling, including: step 1: at a terminal, obtaining a control gain, when determining a signaling message to be transmitted includes data information and control signaling, judging whether a base station has issued a power adjustment; if no, executing step 2; otherwise, executing step 3; step 2: at the terminal, judging whether a current available power of the terminal meets a requirement for simultaneously transmitting the data information and the control signaling according to the control gain; if yes, simultaneously transmitting the data information and the control signaling; if no, but the current available power meets a requirement for transmitting the data information, transmitting the data information first, and then reporting a buffer status report, BSR, to the base station according to the control gain, and transmitting the control signaling in a next cycle based on a newly adjusted power issued by the base station; if the current available power meet neither the requirement for simultaneous transmission nor the requirement for transmitting the data information, transmitting the control information at a maximum transmit power using a Hybrid Automatic Repeat Request, HARQ, mechanism; and step 3: at the terminal, if the adjusted power issued by the base station is greater than or equal to the control gain, transmitting the data information and the control signaling at the adjusted power; if the adjusted power issued by the base station is smaller than the control gain, executing step 2.

## Description

### TECHNICAL FIELD

The disclosure relates to mobile communications, and in particular, to a method and system for transmitting control signaling.

### BACKGROUND

A Long Term Evolution (LTE) system under the 3rd Generation Partnership Project (3GPP), as a new generation of wireless communication technology, is mainly based on Orthogonal Frequency Division Multiplexing (OFDM). The OFDM has become advantageous in the development of wireless communication systems and has been adopted by multiple standards. The major advantages of the OFDM system lie in high spectrum efficiency, high bandwidth expansibility, high anti-multipath fading, convenient for assigning spectrum resources and implementing Multiple-Input Multiple-Out-put (MIMO) techniques, etc.

For an Orthogonal Frequency Division Multiple Access (OFDMA) based broadband wireless access system, when the frequency reuse factor is low, especially when a same carrier frequency is used in adjacent cells, the adjacent cells may use same sub-carrier resources, causing serious inter-cell interference. Due to the inter-cell interference, a cell-edge user performance suffers from a great declination, where the capacity of the cell is mainly limited by the inter-cell interference.

In the uplink, due to the uplink interference, it is necessary to increase the transmit power of the mobile station in order to enable the uplink signal quality of an individual user to achieve a desired objective, resulting in an increased power consumption of the mobile station. On another hand, due to the increased power of the mobile station itself, which increases the interference to other users, an interference power to thermal noise power ratio IOT (Interference over Thermal) generated by all user equipments (UE) in other cells and measured by the receiver at the base station is increased. Therefore, effective uplink power control can effectively reduce the inter-cell interference, and improve throughput in a cell, especially the cell edge.

In the LTE system, for the uplink power control, open and closed loop control are combined. For the open loop control portion, the UE adjusts transmit power based on uplink resource allocation, transmission format, path loss and some parameters for base station broadcast. For the closed loop control portion, the base station transmits a target power control command (TPC) to the UE to achieve the uplink transmit power adjustment of the UE.

The transmit power of the UE in a Physical uplink share channel (PUSCH) is determined by the base station, while the specific transmit power is calculated at the UE. The base station informs the UE of necessary parameters for performing uplink shared channel power control through a broadcast message and a radio link control (RRC) signaling, etc, and adjusts the uplink transmit power of the UE in real-time on a downlink control channel. The UE calculates the current transmission power of the uplink shared channel and performs power adjustment according to the formula in the specification. Therefore, the UE perform power control based on the actual situation and the result has a significant impact on the system.

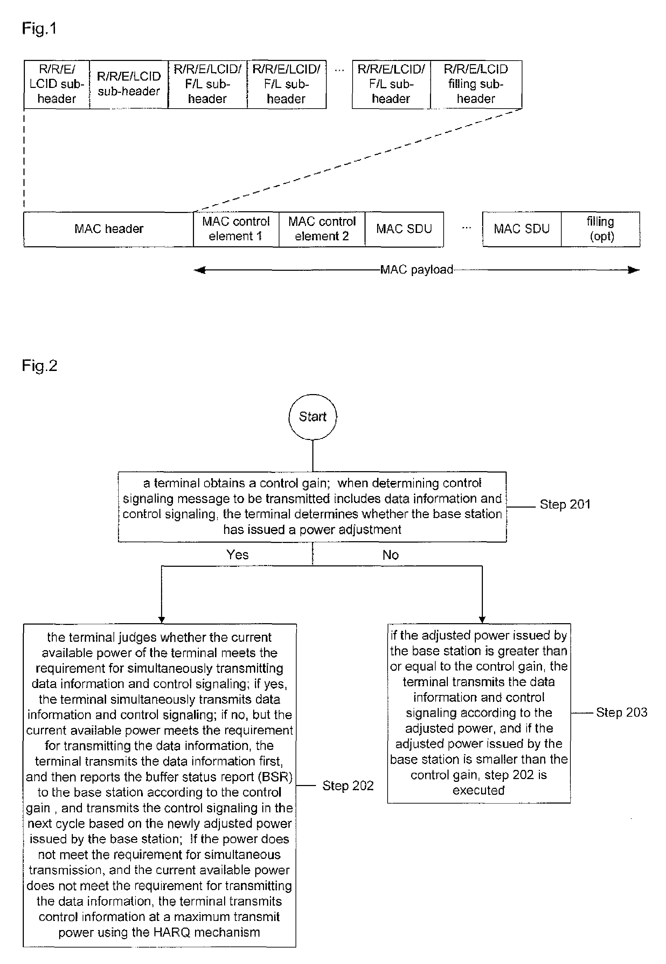

Generally, during radio link control, the wireless system allows for a certain error rate, and the specific value of the error rate may depend on the vender. There are some control elements in the system, the control elements and data together form a media access control (MAC) packet for transmission via an air interface. Fig. 1 is a schematic diagram of a MAC packet of a data packet in the prior art. As shown in Fig. 1, an MAC packet takes a form of an MAC header (containing a plurality of sub-headers) + MAC payload (payload), the MAC payload contains MAC Control Element 1, MAC Control Element 2, ..., MAC Control Element n, and MAC Service Data Unit (SDU) 1, MAC SDU 2, ... , MAC SDU n.

The Control Element (CE) generally has a certain error rate, and are more susceptible to the influence of channel fading, for example, control element power margin (power headroom (PHR)), and bandwidth scheduling request amount (the buffer status report (BSR)) and the like.

For the above problem, in the prior art, the error packet is addressed by an error retransmission mechanism of Hybrid Automatic Repeat Request (HARQ) to achieve data transmission and correction. However, the HARQ retransmission has costs: firstly, HARQ retransmission will cause waste of system resources, when data cannot be parsed successfully, then the entire HARQ process will be blocked, system utilization will be declined, and the performance will also be reduced; secondly, HARQ retransmission also take time, an error in a control element will cause system delay, which will affect the Key Performance Indicator (KPI) of some systems.

### SUMMARY

In view of the above, the disclosure provides a method and system for transmitting control signaling, which efficiently solves the problem of system resource waste and system utilization and performance reduction caused by retransmitting erroneous packets in the HARQ mechanism in the related art.

The method for transmitting control signaling provided by the disclosure includes
step 1: at a terminal, obtaining a control gain, when determining a signaling message to be transmitted includes data information and control signaling, judging whether a base station has issued a power adjustment; if no, executing step 2; otherwise, executing step 3;
step 2: at the terminal, judging whether a current available power of the terminal meets a requirement for simultaneously transmitting the data information and the control signaling according to the control gain; if yes, simultaneously transmitting the data information and the control signaling; if no, but the current available power meets a requirement for transmitting the data information, transmitting the data information first, and then reporting a buffer status report, BSR, to the base station according to the control gain, and transmitting the control signaling in a next cycle based on a newly adjusted power issued by the base station; if the current available power meet neither the requirement for simultaneous transmission nor the requirement for transmitting the data information, transmitting the control information at a maximum transmit power using a Hybrid Automatic Repeat Request, HARQ, mechanism; and
step 3: at the terminal, if the adjusted power issued by the base station is greater than or equal to the control gain, transmitting the data information and the control signaling at the adjusted power; if the adjusted power issued by the base station is smaller than the control gain, executing step 2.

The disclosure also provides a control signaling transmission system, including a terminal and a base station, the terminal includes:
an obtaining module, configured to obtain a control gain, when determining a signaling message to be transmitted includes data information and control signaling, judge whether a base station has issued a power adjustment; if no, call a first processing module; otherwise, call a second processing module;
the first processing module, configured to judge whether a current available power of the terminal meets a requirement for simultaneously transmitting the data information and the control signaling according to the control gain; if yes, simultaneously transmit the data information and the control signaling; if no, but the current available power meets a requirement for transmitting the data information, transmit the data information first, and then report a buffer status report, BSR, to the base station according to the control gain, and transmit the control signaling in a next cycle based on a newly adjusted power issued by the base station; if the current available power meet neither the requirement for simultaneous transmission nor the requirement for transmitting the data information, transmit the control information at a maximum transmit power using a Hybrid Automatic Repeat Request, HARQ, mechanism; and
a second processing module, configured to transmit the data information and the control signaling at the adjusted power issued by the base station if the adjusted power is greater than or equal to the control gain and call the first processing module if the adjusted power issued by the base station is smaller than the control gain.

The above technical solutions have the following beneficial effects:
when the terminal finds that there is signaling message to be transmitted, the terminal adjusts the transmit power of the carrier according to the obtained control gain and / or the power adjustment issued by the base station. In this way, the problem of waste of system resources, system utilization and performance declination as a result of retransmission of erroneous packets under the HARQ mechanism is solved, such that it is possible to avoid the waste of system resources, system utilization and performance declination, while improving the quality of the control signal and the reliability of the terminal.

### BRIEF DESCRIPTION OF THE DRAWINGS

Figure 1 is a schematic diagram of an MAC packet of a data packet in the related art;
Figure 2 is a flowchart of a method for transmitting control signaling according to an embodiment of the disclosure;
Figure 3 is a flowchart showing a detailed process of the method for transmitting control signaling according to an embodiment of the disclosure;
Figure 4 is a schematic diagram of a first method for configuring control gain by using a closed-loop gain control gain control gain configuration approach according to an embodiment of the disclosure;
Figure 5 is a schematic diagram of a second method for configuring control gain by using a closed-loop gain control gain control gain configuration approach according to an embodiment of the disclosure;
Figure 6 is a block diagram of a control signaling transmission system according to an embodiment of the disclosure.

### DETAILED DESCRIPTION

To solve the system resource waste and system utilization and performance reduction caused by retransmitting erroneous packets in the HARQ mechanism in the related art, the disclosure provides a method and system for transmitting control signaling. The accompanying drawings and the following embodiments of the disclosure will be described in more detail. It should be understood that the specific embodiments described herein are merely to illustrate the invention and are not to limit the invention.

### Method Embodiment

According to an embodiment of the disclosure, there is provided a method for transmitting control signaling. Fig. 2 is a flowchart of a method for transmitting control signaling according to an embodiment of the disclosure. As shown in Figure 2, the method for transmitting control signaling according to the embodiment of the disclosure includes the following steps.

Step 201: a terminal obtains a control gain; when determining control signaling message to be transmitted includes data information and control signaling, the terminal determines whether the base station has issued a power adjustment, if no, step 202 is executed, otherwise, step 203 is executed.

Specifically, in step 201, the terminal's obtaining the control gain is divided into obtaining the control gain in a closed loop mode and obtaining the control gain in an open-loop mode. In the closed loop mode, a base station obtains a control gain configured by a user from a network element management system, and issues the control gain to the terminal, such that the terminal obtains the control gain.

In an example, the base station may issue the control gain to the terminal in one of the following ways:
1) a base station writes the control gain into a system broadcast message, and transmits the broadcast message containing the control gain to the terminal.
2) a distance state of the terminal is set according to the distance from the base station and adjusts the control gain obtained from the network element management system according to the distance state, and issues the adjusted control gain to the terminal.

In the open-loop mode, the terminal obtains the control gain according to a level difference corresponding to an adjacent modulation coding scheme.

Step 202: the terminal judges whether the current available power of the terminal meets the requirement for simultaneously transmitting data information and control signaling; if yes, the terminal simultaneously transmits data information and control signaling; if no, but the current available power meets the requirement for transmitting the data information, the terminal transmits the data information first, and then reports the buffer status report (BSR) to the base station according to the control gain , and transmits the control signaling in the next cycle based on the newly adjusted power issued by the base station; If the power does not meet the requirement for simultaneous transmission, and the current available power does not meet the requirement for transmitting the data information, the terminal transmits control information at a maximum transmit power using the HARQ mechanism.

Step 203: if the adjusted power issued by the base station is greater than or equal to the control gain, the terminal transmits the data information and control signaling according to the adjusted power, and if the adjusted power issued by the base station is smaller than the control gain, step 202 is executed.

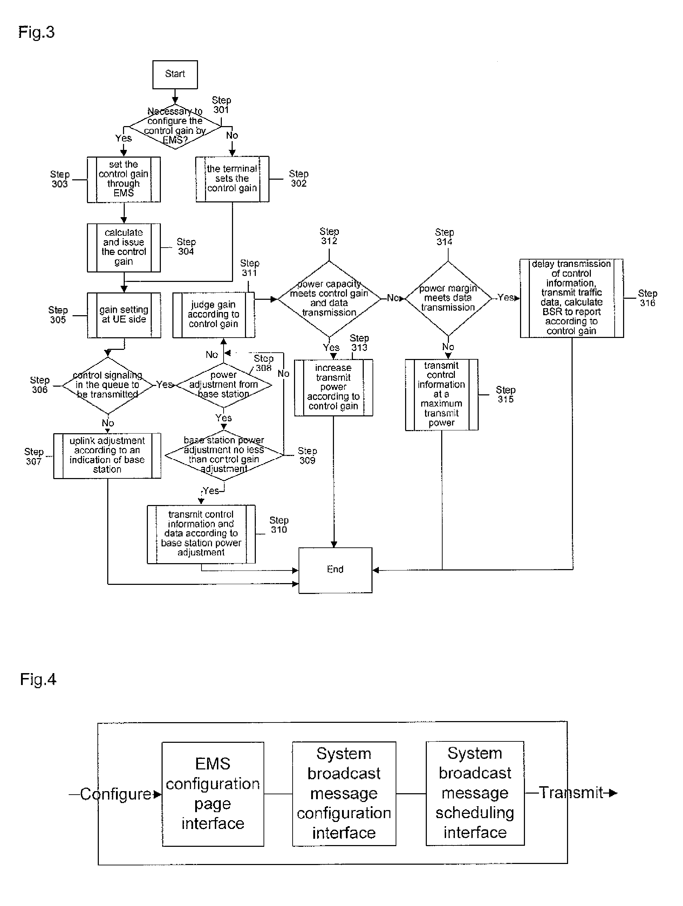

Hereinafter, the embodiments of the disclosure will be described with reference to the accompanying drawings. In an embodiment of the disclosure, the terminal may obtain control gain by one of the following approaches: 1) a closed-loop gain control gain configuration approach, i.e., obtaining the control gain issued by the system; and 2) a open-loop gain control gain configuration approach, i.e., calculating the control gain by the terminal itself. Fig. 3 is a flowchart showing a detailed process of the method for transmitting control signaling according to an embodiment of the disclosure. As shown in Figure 3, the process includes the following steps.

Step 301: it is determined whether it is necessary to configure the control gain by the network element management system (EMS), if yes, then the process jumps to step 303 , if no, step 302 is executed.

Step 302: the control gain is configured by the open loop gain control gain configuration approach. In particular, the terminal need not to receive the control gain issued by the system, the terminal designs a control gain according to its own design feature, and the process jumps to step 304.

Step 303: the control gain is configured by the open loop gain control gain configuration approach. In particular, the system sets the control gain through the EMS, and step 304 is executed.

Step 304: when the control gain is configured by the open loop gain control gain configuration approach, the following operations have to be performed: the terminal designs a control gain according to its own design feature : setting the control gain to be a level difference corresponding to the adjacent Modulation And Coding Scheme (MCS). In the LTE system, the level difference between the MCS levels is small, the actual control gain can be designed to differ from the power difference of the actual system demodulation threshold by an MCS level. For example, the transmit power of the data required for the system corresponds to MCS = 20, then the control gain may be set according to the Power Spectrum Density (PSD) required to meet MCS = 21.

When the control gain is configured by the closed loop gain control gain configuration approach, one of the following methods may be employed: the control gain may be configured at a background interface, and the terminal obtains the control gain value set by the system through a message (for example, a broadcast message) issued by the parse system, or the terminal may obtains the control gain value by calculation performed at the system.

Method 1: Figure 4 is a schematic diagram of a first method for configuring control gain by using a closed-loop gain control gain control gain configuration approach according to an embodiment of the disclosure. As shown in Figure 4, an EMS configuration page interface, a system broadcast message configuration interface and a system broadcast message scheduling interface are presented, in which the EMS configuration page interface is linked to a data configuration page at the EMS background, and is adapted for a user to input control gain data x(db) which needs configuration from the EMS data configuration page. The system broadcast message interface is adapted to write the configured gain into a for system broadcasting, and converts into a specific format under a control broadcast message protocol. The system broadcast message scheduling interface is adapted to issue the configured broadcast messages to the terminal via the air interface. In other words, the system broadcast message configuration interface writes the control gain into the control broadcast message (Sib2), which is then issued to the terminal through the system broadcast message scheduling interface. All the control gains are issued through system broadcasting, and therefore, all the terminals use the same control gain, i.e., y = x.

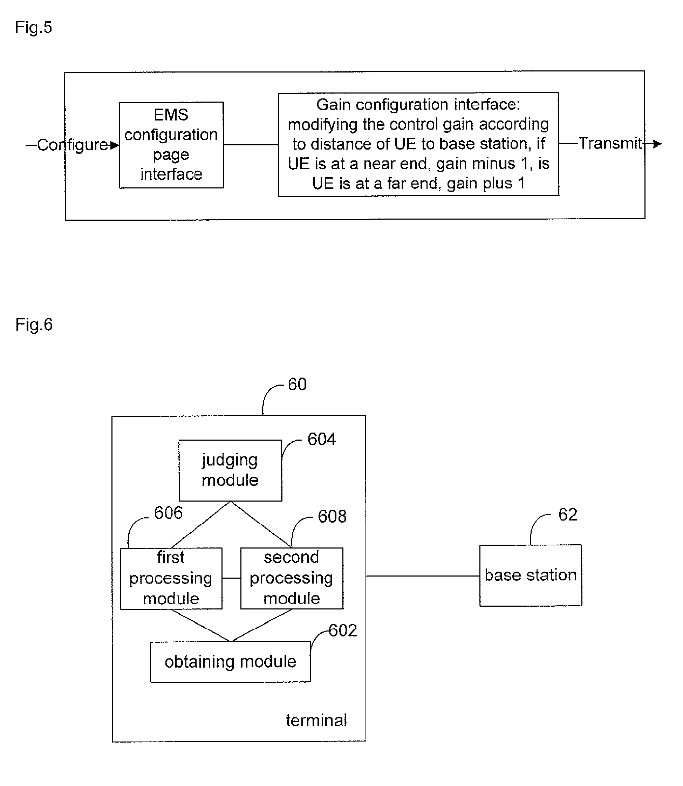

Method: Figure 5 is a schematic diagram of a second method for configuring control gain by using a closed-loop gain control gain control gain configuration approach according to an embodiment of the disclosure. As shown in Figure 5, an EMS configuration page interface and a gain configuration interface are presented, in which the EMS configuration page interface is linked to a data configuration page at the background of the EMS and is adapted for the user to input configuration information. The gain configuration interface is adapted to obtain the gain value in the configuration data and set the distance state of the terminal according to the distance of the terminal to the system (base station), for example , near / median / far; then , modify the specific gain control value for the UE's gain according to the distance state of the terminal, and sends it for the terminal. That is, after the control gain is issued to the system by the EMS configuration page interface, the system gain configuration interface performs adjustment according to the distance of the terminal to the system. Specifically, for the terminal near the system, 1 is subtracted from the control gain, that is , y = x-1; for the terminal far from the system, 1 is added to the control gain, that is, y = x +1; for the terminal having a median distance to the system, the control gain is not modified, that is, y = x. Subsequently, the modified control gain for the terminal is issued. Among them, the distance discrimination is calculated based on a path loss from the terminal to the base station, if the path loss is less than or equal to 90, the system sets the terminal as a near terminal (equivalently, UE can be considered as performing data transmission using 64QAM); if the path loss is less than 110 and more than 90, the terminal is set as a median distance terminal (equivalently, the UE can be considered as performing data transmission using 16czar); and if the path loss is more than 110, the terminal is set as a long distance terminal (equivalently, the UE can be considered as performing data transmission using QPSK).

Step 305: the terminal sets the gain according to the control gain issued by the system or calculated by itself. Specifically, the terminal calculates and maintains the gain based on the issued gain.

Step 306: the terminal determines whether the transmit queue includes control signaling, if yes, step 307 is executed, otherwise step 308 is executed.

Step 307: the terminal performs power control according to the Transmit Power Control (TPC) command issued by the system, and transmits data using the assigned resources.

Step 308: it is determined whether the terminal has the TPC command issued by the system, if yes, step 309 is executed, otherwise, step 311 is executed.

Step 309: the UE determines whether the power adjustment from the system is greater than or equal to the control gain, and if yes, step 310 is executed, otherwise, step 311 is executed.

For example, if the adjusted power issued by the base station is A db, the control gain is B db, where each of A and B represents an adjustment amount (e.g., A = 1 db, B = 0.5db). If A ≥ B, this means the current transmission power margin of the terminal is enough, and the adjusted power of the system is enough, and step 310 is executed. If A <B, a power adjustment value does not meet the requirement of the control gain, the control gain is leaved to be processed later in accordance power adjustment requirement, step 311 is executed and the buffer status report (BSR) is updated.

Step 310: if the TPC command issued by the system is greater than or equal to the control gain, e.g., t = 2, p = 1, the data transmit base power is equal to 1, then the transmit power of the terminal in response to the TPC command transmitted by the system will reach 3, which can already meet the requirement of the control signaling (y = 2), and the terminal transmits data according to the adjustment value issued by the system.

Step 311: the terminal determines the gain based on the control gain.

Step 312: the terminal compares y with the available power p of the terminal to determine meet the data transmission requirement can be met, if yes, step 313 is executed, otherwise, step 314 is executed.

Step 313: if the control gain can meet the requirement for transmission of data and control signaling, e.g., y = 1, the transmission data M = 8, a the data transmit base power is 1, the available power p = 5, then the power required for simultaneous transmission of data and control signaling should be 2 + log₂8 = 5. If p = 5, the transmission of data and control signaling can be met, then the UE transmits data and control signaling at the transmit power meeting the control gain. If at this time the available power is 4, then it cannot meet the requirement for transmission of data and control signaling.

Step 314: when the gain does not meet the transmission of data and control signaling, the data is processed to achieve the purpose of improving the gain of the message, and it is determined whether the available power p meets the transmission of data, if yes, step 316 is executed, otherwise, step 315 is executed.

Step 315: when the power requirement for transmission of control signaling can be met by using the HARQ mechanism at the maximum transmission power e.g. , a transmission power =1 < ( 1 +1 ), the HARQ retransmission is used to transmit the control signaling.

Step 316: in order to make full use of the air interface resources, data M = 8 sis transmitted first, and the power required for the data transmission is 1 + log₂8 = 4. Since control signaling cannot be transmitted at this time, the transmission of the control signaling is delayed, and according to the transmit power requirement, the data transmission limit is calculated as 2 ^ ( 4-1-1 ) = 4. The BSR reported to the base station is 4. Next time the base station allocates M = 4, the control signaling and the data can be transmitted to the base station together.

In summary, with schemes described in the embodiments of the disclosure, when the terminal finds that there is signaling message to be transmitted, the terminal adjusts the transmit power of the carrier according to the obtained control gain and / or the power adjustment issued by the base station. In this way, the problem of waste of system resources, system utilization and performance declination as a result of retransmission of erroneous packets under the HARQ mechanism is solved, such that it is possible to avoid the waste of system resources, system utilization and performance declination, while improving the quality of the control signal and the reliability of the terminal.

### Apparatus Embodiment

According to an embodiment of the disclosure, there is provided a control signaling transmission system. Figure 6 is a block diagram of the control signaling transmission system according to an embodiment of the disclosure. As shown in Figure 6, the control signaling transmission system according to the embodiment of the disclosure includes a terminal 60 and a base station 62. The terminal 60 includes an obtaining module 602, a judging module 604, a first processing module 606 and a second processing module 608, which will be described in detail hereinafter.

Specifically, the obtaining module 602 is configured to obtain a control gain.

In the closed loop mode, the base station 62 obtains a control gain configured by a user from a network element management system, and issues the control gain to the obtaining module 602, such that the obtaining module 602 obtains the control gain issued by the base station 62. In an example, the base station 62 may issue the control gain to the obtaining module 602 in one of the following ways:
1) the base station 62 writes the control gain into a system broadcast message, and transmits the broadcast message containing the control gain to the terminal 60.
2) the base station 62 sets a distance state of the terminal 60 according to the distance of the terminal 60 to the base station 62 and adjusts the control gain obtained from the network element management system according to the distance state, and issues the adjusted control gain to the terminal 60.

In the open-loop mode, the obtaining module 602 obtains the control gain according to a level difference corresponding to an adjacent modulation coding scheme.

The judging module 604 is configured to judge whether the base station has issued a power adjustment, when determining the signaling message to be transmitted includes data information and control signaling, if no, call the first processing module 606, otherwise, call the second processing module 608.

The first processing module 606 is configured to judge whether the current available power of the terminal 60 meets the requirement for simultaneously transmitting data information and control signaling; if yes, the terminal simultaneously transmits data information and control signaling; if no, but the current available power meets the requirement for transmitting the data information, the terminal transmits the data information first, and then reports the buffer status report (BSR) to the base station 62 according to the control gain , and transmits the control signaling in the next cycle based on the newly adjusted power issued by the base station 62; If the power does not meet the requirement for simultaneous transmission, and the current available power does not meet the requirement for transmitting the data information, the terminal transmits control information at a maximum transmit power using the HARQ mechanism.

The second processing module 608 is configured to, if the adjusted power issued by the base station 62 is greater than or equal to the control gain, the terminal transmits the data information and control signaling according to the adjusted power, and if the adjusted power issued by the base station 62 is smaller than the control gain, call the first processing module 606.

Hereinafter, the embodiments of the disclosure will be described with reference to the accompanying drawings. In an embodiment of the disclosure, the terminal may obtain control gain by one of the following approaches : 1) a closed-loop gain control gain configuration approach, i.e., obtaining the control gain issued by the system; and 2) a open-loop gain control gain configuration approach, i.e., calculating the control gain by the terminal itself. Fig. 3 is a flowchart showing a detailed process of the method for transmitting control signaling according to an embodiment of the disclosure. As shown in Figure 3, the process includes the following steps.

Step 301: it is determined whether it is necessary to configure the control gain by the network element management system (EMS), if yes, then the process jumps to step 303 , if no, step 302 is executed.

Step 302: the control gain is configured by the open loop gain control gain configuration approach. In particular, the terminal need not to receive the control gain issued by the system, the terminal designs a control gain according to its own design feature, and the process jumps to step 304.

Step 303: the control gain is configured by the open loop gain control gain configuration approach. In particular, the system sets the control gain through the EMS, and step 304 is executed.

Step 304: when the control gain is configured by the open loop gain control gain configuration approach, the following operations have to be performed: the terminal designs a control gain according to its own design feature : setting the control gain to be a level difference corresponding to the adjacent Modulation And Coding Scheme (MCS). In the LTE system, the level difference between the MCS levels is small, the actual control gain can be designed to differ from the power difference of the actual system demodulation threshold by an MCS level. For example, the transmit power of the data required for the system corresponds to MCS = 20, then the control gain may be set according to the Power Spectrum Density (PSD) required to meet MCS = 21.

When the control gain is configured by the closed loop gain control gain configuration approach, one of the following methods may be employed: the control gain may be configured at a background interface, and the terminal obtains the control gain value set by the system through a message (for example, a broadcast message) issued by the parse system, or the terminal may obtains the control gain value by calculation performed at the system.

Method 1: Figure 4 is a schematic diagram of a first method for configuring control gain by using a closed-loop gain control gain control gain configuration approach according to an embodiment of the disclosure. As shown in Figure 4, an EMS configuration page interface, a system broadcast message configuration interface and a system broadcast message scheduling interface are presented, in which the EMS configuration page interface is linked to a data configuration page at the EMS background, and is adapted for a user to input control gain data x(db) which needs configuration from the EMS data configuration page. The system broadcast message interface is adapted to write the configured gain into a for system broadcasting, and converts into a specific format under a control broadcast message protocol. The system broadcast message scheduling interface is adapted to issue the configured broadcast messages to the terminal via the air interface. In other words, the system broadcast message configuration interface writes the control gain into the control broadcast message (Sib2), which is then issued to the terminal through the system broadcast message scheduling interface. All the control gains are issued through system broadcasting, and therefore, all the terminals use the same control gain, i.e., y = x.

Method: Figure 5 is a schematic diagram of a second method for configuring control gain by using a closed-loop gain control gain control gain configuration approach according to an embodiment of the disclosure. As shown in Figure 5, an EMS configuration page interface and a gain configuration interface are presented, in which the EMS configuration page interface is linked to a data configuration page at the background of the EMS and is adapted for the user to input configuration information. The gain configuration interface is adapted to obtain the gain value in the configuration data and set the distance state of the terminal according to the distance of the terminal to the system (base station), for example , near / median / far; then , modify the specific gain control value for the UE's gain according to the distance state of the terminal, and sends it for the terminal. That is, after the control gain is issued to the system by the EMS configuration page interface, the system gain configuration interface performs adjustment according to the distance of the terminal to the system. Specifically, for the terminal near the system, 1 is subtracted from the control gain, that is , y = x-1; for the terminal far from the system, 1 is added to the control gain, that is, y = x +1; for the terminal having a median distance to the system, the control gain is not modified, that is, y = x. Subsequently, the modified control gain for the terminal is issued. Among them, the distance discrimination is calculated based on a path loss from the terminal to the base station, if the path loss is less than or equal to 90, the system sets the terminal as a near terminal (equivalently, UE can be considered as performing data transmission using 64QAM); if the path loss is less than 110 and more than 90, the terminal is set as a median distance terminal (equivalently, the UE can be considered as performing data transmission using 16QAM); and if the path loss is more than 110, the terminal is set as a long distance terminal (equivalently, the UE can be considered as performing data transmission using QPSK).

Step 305: the terminal sets the gain according to the control gain issued by the system or calculated by itself. Specifically, the terminal calculates and maintains the gain based on the issued gain.

Step 306: the terminal determines whether the transmit queue includes control signaling, if yes, step 307 is executed, otherwise step 308 is executed.

Step 307: the terminal performs power control according to the Transmit Power Control (TPC) command issued by the system, and transmits data using the assigned resources.

Step 308: it is determined whether the terminal has the TPC command issued by the system, if yes, step 309 is executed, otherwise, step 311 is executed.

Step 309: the UE determines whether the power adjustment from the system is greater than or equal to the control gain, and if yes, step 310 is executed, otherwise, step 311 is executed.

For example, if the adjusted power issued by the base station is A db, the control gain is B db, where each of A and B represents an adjustment amount (e.g., A = 1 db, B = 0.5db). If A ≥ B, this means the current transmission power margin of the terminal is enough, and the adjusted power of the system is enough, and step 310 is executed. If A <B, a power adjustment value does not meet the requirement of the control gain, the control gain is leaved to be processed later in accordance power adjustment requirement, step 311 is executed and the buffer status report (BSR) is updated.

Step 310: if the TPC command issued by the system is greater than or equal to the control gain, e.g., t = 2, p = 1, the data transmit base power is equal to 1, then the transmit power of the terminal in response to the TPC command transmitted by the system will reach 3, which can already meet the requirement of the control signaling (y = 2), and the terminal transmits data according to the adjustment value issued by the system.

Step 311: the terminal determines the gain based on the control gain.

Step 312: the terminal compares y with the available power p of the terminal to determine meet the data transmission requirement can be met, if yes, step 313 is executed, otherwise, step 314 is executed.

Step 313: if the control gain can meet the requirement for transmission of data and control signaling, e.g., y = 1, the transmission data M = 8, a the data transmit base power is 1, the available power p = 5, then the power required for simultaneous transmission of data and control signaling should be 2 + log₂8 = 5. If p = 5, the transmission of data and control signaling can be met, then the UE transmits data and control signaling at the transmit power meeting the control gain. If at this time the available power is 4, then it cannot meet the requirement for transmission of data and control signaling.

Step 314: when the gain does not meet the transmission of data and control signaling, the data is processed to achieve the purpose of improving the gain of the message, and it is determined whether the available power p meets the transmission of data, if yes, step 316 is executed, otherwise, step 315 is executed.

Step 315: when the power requirement for transmission of control signaling can be met by using the HARQ mechanism at the maximum transmission power e.g. , a transmission power =1 < ( 1 +1 ), the HARQ retransmission is used to transmit the control signaling.

Step 316: in order to make full use of the air interface resources, data M = 8 is transmitted first, and the power required for the data transmission is 1 + log₂8 = 4. Since control signaling cannot be transmitted at this time, the transmission of the control signaling is delayed, and according to the transmit power requirement, the data transmission limit is calculated as 2 ^ ( 4-1-1 ) = 4. The BSR reported to the base station is 4. Next time the base station allocates M = 4, the control signaling and the data can be transmitted to the base station together.

In summary, with schemes described in the embodiments of the disclosure, when the terminal finds that there is signaling message to be transmitted, the terminal adjusts the transmit power of the carrier according to the obtained control gain and / or the power adjustment issued by the base station. In this way, the problem of waste of system resources, system utilization and performance declination as a result of retransmission of erroneous packets under the HARQ mechanism is solved, such that it is possible to avoid the waste of system resources, system utilization and performance declination, while improving the quality of the control signal and the reliability of the terminal.

The preferred embodiments are disclosed for the purpose of illustration only. The skilled in the art should appreciate that various modifications, additions and replacements are possible. Therefore, the scope of the disclosure should not be limited to the above embodiments.

## Claims

1. A method for transmitting control signaling, comprising:
step 1: at a terminal, obtaining a control gain, when determining a signaling message to be transmitted includes data information and control signaling, judging whether a base station has issued a power adjustment; if no, executing step 2; otherwise, executing step 3;
step 2: at the terminal, judging whether a current available power of the terminal meets a requirement for simultaneously transmitting the data information and the control signaling according to the control gain; if yes, simultaneously transmitting the data information and the control signaling; if no, but the current available power meets a requirement for transmitting the data information, transmitting the data information first, and then reporting a buffer status report, BSR, to the base station according to the control gain, and transmitting the control signaling in a next cycle based on a newly adjusted power issued by the base station; if the current available power meet neither the requirement for simultaneous transmission nor the requirement for transmitting the data information, transmitting the control information at a maximum transmit power using a Hybrid Automatic Repeat Request, HARQ, mechanism; and
step 3: at the terminal, if the adjusted power issued by the base station is greater than or equal to the control gain, transmitting the data information and the control signaling at the adjusted power; if the adjusted power issued by the base station is smaller than the control gain, executing step 2.

2. The method according to claim 1, wherein in a closed loop mode, the obtaining the control gain comprises:
at the base station, obtaining the control gain configured by a user from a network element management system; and
at the base station, issuing the control gain to the terminal, such that the terminal obtains the control gain.

3. The method according to claim 2, wherein the issuing the control gain to the terminal comprises:
at the base station, writing the control gain into a system broadcast message, and issuing the broadcast message containing the control gain to the terminal.

4. The method according to claim 2, wherein the issuing the control gain to the terminal comprises:
at the base station, setting a distance state of the terminal according to a distance of the terminal to the base station, and adjusting the control gain obtained from the network element management system according to the distance state, and issuing the adjusted control gain to the terminal.

5. The method according to claim 1, wherein in an open loop mode, the obtaining the control gain comprises:
at the terminal, obtaining the control gain according to a level difference corresponding to an adjacent modulation and encoding scheme.

6. A control signaling transmission system, comprising a terminal and a base station, wherein the terminal comprises:
an obtaining module, configured to obtain a control gain, when determining a signaling message to be transmitted includes data information and control signaling, judge whether a base station has issued a power adjustment; if no, call a first processing module; otherwise, call a second processing module;
the first processing module, configured to judge whether a current available power of the terminal meets a requirement for simultaneously transmitting the data information and the control signaling according to the control gain; if yes, simultaneously transmit the data information and the control signaling; if no, but the current available power meets a requirement for transmitting the data information, transmit the data information first, and then report a buffer status report, BSR, to the base station according to the control gain, and transmit the control signaling in a next cycle based on a newly adjusted power issued by the base station; if the current available power meet neither the requirement for simultaneous transmission nor the requirement for transmitting the data information, transmit the control information at a maximum transmit power using a Hybrid Automatic Repeat Request, HARQ, mechanism; and
a second processing module, configured to transmit the data information and the control signaling at the adjusted power issued by the base station if the adjusted power is greater than or equal to the control gain and call the first processing module if the adjusted power issued by the base station is smaller than the control gain.

7. The system according to claim 6, wherein the base station is configured to, in a closed loop mode, obtain the control gain configured by a user from a network element management system, and issue the control gain to the obtaining module, and
wherein in the closed loop mode, the obtaining module obtains the control gain issued by the base station.

8. The system according to claim 7, wherein the base station issues the control gain to the terminal by writing the control gain into a system broadcast message and issuing the broadcast message containing the control gain to the terminal.

9. The system according to claim 7, wherein the base station sets a distance state of the terminal according to a distance of the terminal to the base station, adjusts the control gain obtained from the network element management system according to the distance state, and issues the adjusted control gain to the terminal.

10. The system according to claim 6, wherein in an open loop mode, the obtaining module obtains the control gain according to a level difference corresponding to an adjacent modulation and encoding scheme.
